# EUROPEAN PATENT SPECIFICATION

(11) **EP 2 548 434 B1**
(45) Date of publication and mention of the grant of the patent: **06.12.2017**
(21) Application number: 12176121.7
(22) Date of filing: 12.07.2012
(51) Int. Cl.: A01G 1/00, A01G 1/06, A01G 17/00

(54) **New tree**
Neuer Baum
Nouvel arbre

(30) Priority: 18.07.2011 EP 11174322
(43) Date of publication of application: 23.01.2013
(73) Proprietor: BVBA Carolus C., 3850 Nieuwerkerken (BE)
(72) Inventor: Carolus, Koen, 3850 Nieuwerkerken (BE); Colda, Geert, 3454 Geetbets-Rummen (BE)
(74) Representative: Vanhalst, Koen

(56) References cited:
- WO-A2-2008/047297
- BROWN SYDNEY PARK ET AL.: "Espaliers", University of Florida , November 2010 (2010-11), XP002685450, Gainesville, Florida [US] Retrieved from the Internet: URL:http://edis.ifas.ufl.edu/pdffiles/MG/M G27300.pdf [retrieved on 2012-10-17]
- NEWCOMER MARYANN: "Training apple and fruit trees against a wall", examiner.com , 4 March 2009 (2009-03-04), XP002685451, Retrieved from the Internet: URL:http://www.examiner.com/article/traini ng-apple-and-fruit-trees-against-a-wall [retrieved on 2012-10-17]
- anonymous: "10 Amazing Examples of Espalier", The Lovely Plants , 17 December 2010 (2010-12-17), XP002685452, Retrieved from the Internet: URL:http://www.thelovelyplants.com/10-amaz ing-examples-of-espalier-tree-art/ [retrieved on 2012-10-17]
- JACYNA TADEUSZ ET AL: "Induction of lateral shoots in unpruned leaders of young sweet cherry trees", JOURNAL OF FRUIT AND ORNAMENTAL PLANT RESEARCH, vol. 16, 2008, pages 65-73, XP002667285, ISSN: 1231-0948
- ARIE VAN DEN BERG: "Certified Nursery Tree Production in Holland", THE COMPACT FRUIT TREE, vol. 36, 1 January 2003 (2003-01-01), pages 43-45, XP055016766,

## Description

### FIELD OF THE INVENTION

The present invention is situated in the field of horticultural methods of obtaining productive fruit trees, more in particular methods for making nursery trees with improved fruit producing capacity when planted in orchards, and such nursery trees and the orchard trees developing therefrom as such.

### BACKGROUND OF THE INVENTION

In the field of industrial fruit growing, growers buy young trees from tree nurseries (nursery trees) for planting or re-planting orchards. It is of the utmost importance to develop nursery trees that have a maximum fruit-bearing capacity at the start of their growth in the orchard, which will be maintained during the life of the tree (typically 10 or more years).

Fruit nursery trees for commercial fruit production traditionally consist of a rootstock onto which a scion is grafted or budded (sometimes, also a so-called 'interstock' is placed between the rootstock and the scion, particularly when graft-incompatibility between rootstock and scion is suspected). The rootstock interacts with the soil and influences the tolerance of the tree against biotic and abiotic stress factors as well as its growth habitus and the fruit quality. The scion consists of the variety with the desired fruit characteristics. Several horticultural methodologies for producing fruit nursery trees are known in the art and traditionally use intervention onto the tree structure by e.g. cutting out, pruning or defoliation methods of the scion.

An often used fruit nursery tree type is the so-called "knip boom" or "knip tree". The "knip" tree is a two-year old fruit tree with a one-year-old crown. The name "knip" (Dutch for 'cut') stems from the cutting of the tree after one year at about 50 to 80 cm above the ground, depending on the variety. In the next year, the top bud is promoted to create a central leader on which sylleptic shoots will form branches which will bear the fruit, having an implantation angle of almost 90° with respect to the stem. The more horizontally growing branches will produce the most fruit, while the more vertically growing branches will grow faster and hence produce more wood (so-called "suckers"). These "suckers" drain the energy from the plant, which could otherwise go to fruit production.

Manipulation of tree architecture in the nursery stage appears to determine the way the tree will further develop in its later life and is currently subject of extensive research and experimentation.

The goal of the present invention is to provide nursery trees as starting material for establishing fruit production orchards, such nursery trees overcoming the drawbacks of the known fruit nursery trees in terms of the start and maintenance of the productivity in the orchard.

Recently, a novel orchard training system, called the 'mur fruitier' or 'fruit wall' is gaining increasing acceptance in the professional fruit industry. In this system, trees are trained to form a rectangular hedge consisting of structural branches (with a typical width of 40 cm from the axis) and a superficial fruit producing zone (extending typically 25 cm deep into the hedge). Pruning of the 'mur fruitier' is done mechanically, which results in significant labor cost savings. For example, mechanical pruning will typically take 2-3 hours per hectare whereas manual pruning will take 70-100 hours per hectare.

Brown Sydney Park et al. (Espaliers, University of Florida, November 2010, http://edis.ifas.ufl.edu/pdffiles/MG/MG27300.pdf) describes a training technique to produce an "espalier", a plant trained to grow in a flat plane against a wall, fence, or trellis. The espalier training technique is outlined in steps (a) to (f) that are depicted in Figures 5 to 10. In step (a), the mean leader is cut at or near buds where one wants the first set of branches (Figure 5). In step (d), the mean leader is again cut at or above the spot where one wants the second set of branches (Figure 8).

Thinning of flowers and/or fruit is common practice in professional orchards to obtain a correct fruit load, to prevent biannual bearing and to control fruit size and quality. Thinning can be achieved in three ways: manually, chemically or mechanically. Manual thinning is far more efficient in the 'mur fruitier' because flowers/fruits are more accessible. Chemical thinning is generally problematic because of the limited availability of chemical compounds and because of their non-specific action (for example smaller but also larger fruits will drop). Chemical thinning is also less desirable from the ecological point of view. Mechanical thinning requires far less labor than manual thinning and overcomes many of the problems associated with chemical thinning. Because flowers and fruits are more accessible, the 'mur fruitier' is more suited for mechanical thinning.

The 'mur fruitier' reduces the cost of manual harvest by an estimated 30% and offers opportunities for implementing mechanical harvesting.

Fruit quality seems to be unaffected and, under comparable fruit load, yields may even increase in 'mur fruitier' orchards.

Establishing a 'mur fruitier' orchard starting from Knip trees or pyramidal trees in general is problematic because these trees need severe pruning and manipulation in order to reach the form and volume required for the 'mur fruitier'. This has as a consequence that the establishment of the desired rectangular hedge form takes several years while fruit production and quality are negatively affected. The present invention aims at providing nursery trees as starting material for establishing 'mur fruitier' orchards, overcoming the drawbacks of the known fruit nursery trees in terms of the start and maintenance of the productivity in such orchards.

### SUMMARY OF THE INVENTION

The present invention provides a new tree (referred to herein as "new tree"), which has been manipulated at the nursery stage in order to obtain nursery trees that will, upon planting in an orchard, have an optimal fruit bearing capacity, starting earlier in the productive life of the tree and being maintained throughout its life time.

The present invention provides a new tree which has been manipulated at the nursery stage so that upon completion of the nursery stage, the architecture of the new tree is already the architecture needed in the adult life of the tree.

The present invention provides subject-matter as set forth in any one and all of the appended claims 1 to 11.

The invention provides a nursery fruit tree having the following characteristics:
- productive branches distributed evenly over the main stem of the nursery fruit tree,
- a substantially uncut main stem, and
- the inclination of the side branches versus the stem approaching 90°.

In another aspect, the invention provides a method for obtaining a nursery fruit tree with optimal balance between fruit and wood production, comprising the steps of:
1) planting a scion of the desired fruit producing variety that has been united with a suitable rootstock or rootstock with interstock,
2) during the first growth year:
   - harmonising the length of the growing nursery fruit trees and inducing the formation of branches by adding growth regulators to the top of the tree when the nursery fruit tree reaches about 20 to 35 % of the desired final tree height,
   - growth inhibition of the main stem, by applying a growth inhibitor when the height of the tree reaches about 40 to 55 % of the desired final tree height, and
   - selective inhibition of side branching,
3) during the second growth year:
   - cutting away the branches competing with the top of the tree,
   - stimulating the induction and/or elongation of proleptic side branches spread over the main stem,
   - stimulating the induction and/or elongation of sylleptic side branches spread over the main stem, and
   - inhibiting growth of side branches spread over the main stem.

Disclosed herein, but not claimed, is:
1. A nursery fruit tree, referred to herein as new tree of type I or new tree of the first type, having an optimal fruit/wood production balance having the following characteristics:
   - preferred height of the tree between 1.8 and 2.7 m,
   - crowns of productive branches at three levels, separated by windows sufficiently large to enable optimal light provision for production and ripening of the fruit,
   - a preferably uncut main stem
   - the inclination of the side branches versus the stem approaching 90°.
2. Preferably, in the nursery fruit tree according to point 1,
   - said first branching level is situated at a height of about 25 to 35 % of the tree,
   - said second branching level is situated at a height of about 40 to 55 % of the tree height,
   - said third branching level is situated at a height of about 60 to 70 % of the tree height.
3. Preferably, the nursery fruit tree according to points 1 or 2, comprises sylleptic shoots for the 1^{st} and the 3^{rd} branch level and proleptic shoots for the 2^{nd} branch level.
4. A fruit tree grown from a nursery fruit tree according to any one of points 1 to 3, preferably an orchard fruit tree is also disclosed, but not claimed.
5. Furthermore, a method for obtaining a nursery fruit tree with optimal balance between fruit and wood production is disclosed, but not claimed, comprising the steps of:
   1) planting a scion of the desired fruit producing variety that has been united with a suitable rootstock or rootstock-interstock,
   2) during the first growth year:
      - harmonising the length of the growing trees and creating a first branching level by inducing branching at the top of the tree, by adding growth regulators when the height of the tree reaches about 20 to 35 % of the desired final height,
      - growth inhibition of main stem, by applying a growth inhibitor when the height of the tree reaches about 40 to 55 % of the desired final height,
      - selective inhibition of side branching,
   3) during the second growth year:
      - cutting away the branches competing with the top of the tree above the second branching level,
      - stimulating elongation and/or induction of proleptic side branches at the second level and/or first branching level,
      - inducing branching at the top of the tree to create a 3^{rd} branching level when the tree reaches a height of about 55 to 70 % of the desired final height, and
      - inhibiting growth of side branches at 1^{st}, 2^{nd} and 3^{rd} level.
6. Preferably, in the method according to point 5, a selective growth regulator for inducing branching selected from the group comprising: BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), PP528 (ethyl-5-(4-chlorophenyl)-2H-tetrazol-2-yl-acetate), PP938 (dyallyl-succinate), is used.
7. Preferably, in the method according to points 5 or 6, a selective inhibitor of the growth of the main stem and/or side branches selected from the group comprising: prohexadione-Ca (cyclohexanecarboxylic acid, 3,5-dioxo-4-(1- oxopropyl)-ion(1-) calcium), ethrel (2-chloroethylphosphonic acid), NAA (naphthaleneacetic acid), butraline (N-sec-butyl-4-tert-butyl-2,6-dinitro-aniline), chlormequat (2-chloroethyltrimethyl-ammonium chloride), daminozide (succinic acid, mono(2,2-dimethylhydrazide)), or paclobutrazol (1-(4-chlorophenyl)-4,4-dimethyl-2-(1H-1,2,4-triazol-1-yl)-3-pentanol), such substances applied alone or in combinations, is used to regulate the height of the tree.
8. Preferably, in the method according to any one of points 5 to 7, growth regulators selected from the group comprising: gibberellic acid (e.g. GA₄, GA₇), BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), PP528 (ethyl-5-(4-chlorophenyl)-2H-tetrazol-2-yl-acetate), PP938 (dyallyl-succinate), such substances applied alone or in combinations, are used to stimulate elongation and/or induction of proleptic side branches.
9. Further disclosed, but not claimed, is a nursery fruit tree obtainable by the method according to any one of points 5 to 8.

The invention provides:
10. A nursery fruit tree, referred to herein as new tree of type II or new tree of the second type, having the following characteristics:
   - productive branches distributed evenly over the main stem of the nursery fruit tree,
   - a substantially uncut main stem, and
   - inclination of the side branches versus the stem approaches 90°.
11. Preferably, the invention provides the nursery fruit tree according to point 10, wherein the side branches are of similar length independent of their position on the main stem.
12. Preferably, the invention provides the nursery fruit tree according to point 10 or 11, wherein the nursery fruit tree comprises sylleptic and proleptic shoots spread over the main stem.
13. Preferably, the invention provides the nursery fruit tree according to any one of points 10 to 12, wherein the height of the nursery fruit tree is between 1.8 and 2.7 m.
14. Preferably, the invention provides the nursery fruit tree according to any one of points 10 to 13, capable of forming a mur fruitier.
15. The invention also provides a fruit tree grown from the nursery fruit tree according to any one of points 10 to 14.
16. The invention also provides a method for obtaining a nursery fruit tree with optimal balance between fruit and wood production, comprising the steps of:
   1) planting a scion of the desired fruit producing variety that has been united with a suitable rootstock or rootstock with interstock,
   2) during the first growth year:
      - harmonising the length of the growing nursery fruit trees and inducing the formation of branches by adding growth regulators to the top portion of the tree during the growing season, starting when the nursery fruit tree reaches about 20 to 35 % of the desired final tree height,
      - growth inhibition of the main stem, by applying a growth inhibitor when the height of the tree reaches about 40 to 55 % of the desired final tree height, and
      - selective inhibition of side branching,
   3) during the second growth year:
      - cutting away the branches competing with the top of the tree,
      - stimulating the induction and/or elongation of proleptic side branches spread over the main stem,
      - stimulating the induction and/or elongation of sylleptic side branches spread over the main stem, and
      - inhibiting growth of side branches spread over the main stem.
17. Preferably, the invention also provides the method according to point 16, wherein a selective growth regulator for inducing branching selected from the group comprising: BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), PP528 (ethyl-5-(4-chlorophenyl)-2H-tetrazol-2-yl-acetate), PP938 (dyallyl-succinate), ethrel (2-chloroethylphosphonic acid), and cyclanilide (1-[[(2,4-Dichlorophenyl)amino]carbonyl]cyclopropanecarboxylic acid), is used.
18. Preferably, the invention also provides the method according to point 16 or 17, wherein, a selective inhibitor of the growth of the main stem and/or side branches selected from the group comprising: prohexadione-Ca (cyclohexanecarboxylic acid, 3,5-dioxo-4-(1-oxopropyl)-ion(1-) calcium), ethrel (2-chloroethylphosphonic acid), NAA (naphthaleneacetic acid), butraline (N-sec-butyl-4-tert-butyl-2,6-dinitro-aniline), chlormequat (2-chloroethyltrimethyl-ammonium chloride), daminozide (succinic acid, mono(2,2-dimethylhydrazide)), or paclobutrazol (1-(4-chlorophenyl)-4,4-dimethyl-2-(1H-1,2,4-triazol-1-yl)-3-pentanol), such substances applied alone or in combinations, is used to regulate the height of the tree.
19. Preferably, the invention also provides the method according to any one of points 16 to 18, wherein growth regulators selected from the group comprising: gibberellic acid (e.g. GA₄, GA₇), BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), PP528 (ethyl-5-(4-chlorophenyl)-2H-tetrazol-2-yl-acetate), or PP938 (dyallyl-succinate), such substances applied alone or in combinations, are used to stimulate induction and/or elongation of proleptic side branches and/or of sylleptic side branches.
20. The invention further provides the nursery fruit tree according to any one of points 10 to 14, obtained by the method according to any one of points 16 to 19.

The new tree according to the present invention has several potential advantages over the known knip tree as is outlined in Table 1 below.

**Table 1: Advantages of new tree disclosed herein over the known knip tree**

| **Knip tree** | **New tree type I** | **New tree type II** |
|---|---|---|
| In tree nursery stage: heavy pruning in first year resulting in strong new growth in the second year | Continuous, balanced growth | Continuous, balanced growth |
| Negative effects of severe pruning in tree nursery stage are carried over to the orchard and will last for the entire life of the tree (15-20 years) | Positive effects of balanced growth in the tree nursery stage are carried over to the orchard and will last for the entire life of the tree (15-20 years) | Positive effects of balanced growth in the tree nursery stage are carried over to the orchard and will last for the entire life of the tree (15-20 years) |
| Long side branches are required to achieve sufficient fruit-producing wood | Shorter side branches deliver the required amount of fruit-producing wood | Shorter side branches deliver the required amount of fruit-producing wood |
| Long side branches means wide spacing in the orchard, resulting in the need to accumulate a lot of new wood in the top of the tree in order to fill up the volume, resulting in problems with light penetration | Closer planting distances, better light penetration and as a result better fruit quality and fruit color | Closer planting distances, better light penetration and as a result better fruit quality and fruit color |
| Higher planting densities can be obtained by heavy pruning upon planting in the orchard but result in a disturbed balance between vegetative and generative structures | No need to prune to reduce tree width in high density planting | No need to prune to reduce tree width in high density planting |
| Need for intensive pruning after planting, for many years, in order to achieve and maintain the desired tree architecture | No need for intensive and prolonged pruning over the life span of the orchard | No need for intensive and prolonged pruning over the life span of the orchard |
| Fertilization has to be optimized to allow vegetative growth and fruit formation at the same time | Fertilization focuses on fruit production only | Fertilization focuses on fruit production only |
| Labor-intensive | Less pruning means less labor cost | Less pruning means less labor cost |
| Constant risk of disequilibrium between vegetative and generative growth, resulting in competition for nutrients between fruit and branches, as such increasing the occurrence of physiological disorders and the sensitivity to pests and diseases, including post-harvest diseases | Better fruit quality | Better fruit quality |
| Biannual bearing risks (exhaustion of the plant in one year, resulting very low fruit production in the next year) | Reduced risk of biannual bearing which is very beneficial for varieties that are prone to it | Reduced risk of biannual bearing which is very beneficial for varieties that are prone to it |
| Unsuited for the 'mur frutier' | Well-suited for the 'mur fruitier' which is designed for mechanical harvesting and therefore requires initial uniformity of the tree rows | Particularly suitable for the rapid creation and maintenance of 'mur fruitier' orchards |
| Requiring many years of conversion for application in the 'mur fruitier', as the tree form (triangular in cross section) deviates strongly from the 'mur fruitier' architecture (rectangular in cross section) | Allowing for the formation of 'mur fruitier' orchards with little need for conversion as the form (well-dispersed 3-level branching) is a better match with the desired hedge architecture | Suitable for the rapid creation of 'mur fruitier' orchards as the form is a perfect fit with the desired hedge architecture |
| Requiring strong stimulation of growth of structural branches to fill in empty top volume in 'mur fruitier' orchards | Allowing for the formation of 'mur fruitier' orchards with only mild growth stimulation of structural branches | Allowing for the rapid and durable formation of 'mur fruitier' orchards with minimal or no growth stimulation of structural branches |
| Requiring strong pruning of structural branches to control lower volume in 'mur fruitier' orchards | Allowing for the formation of 'mur fruitier' orchards with only mild pruning of structural branches | Allowing for the rapid and durable formation of 'mur fruitier' orchards with minimal or no pruning of structural branches |

In Table 2, the maximum expected fruit production of the new tree of type I or type II as defined herein is compared with that of a normal knip tree in the first five years of production, showing that in the second production year (i.e. the second year after planting in the orchard), the trees already can be at 50% of the maximal fruit production and can reach maximal fruit production from the third production year on (Table 2).

**Table 2: Percentage of production versus maximal production for a knip tree and a new tree disclosed herein (new tree type I or type II)**

| **Production year** | **Knip tree** | **New Tree type I or type II** |
|---|---|---|
| 1^{st} year | 10% | 10% |
| 2^{nd} year | 30% | 50% |
| 3^{rd} year | 50% | 100% |
| 4^{th} year | 75% | 100% |
| 5^{th} year | 100% | 100% |
| next years | 100% | 100% |

### DESCRIPTION OF THE DRAWINGS

**Fig 1****:** Schematic representation of the methodology for making the new tree of type I.
**Fig 2****:** Schematic representation of the methodology for making the new tree of type II according to an embodiment of the invention.

### DETAILED DESCRIPTION OF THE PREFERRED EMBODIMENTS

As used herein, the singular forms "a", "an", and "the" include both singular and plural referents unless the context clearly dictates otherwise. By way of example, "an antibody" refers to one or more than one antibody; "an antigen" refers to one or more than one antigen.

The terms "comprising", "comprises" and "comprised of" as used herein are synonymous with "including", "includes" or "containing", "contains", and are inclusive or open-ended and do not exclude additional, non-recited members, elements or method steps.

The term "and/or" as used in the present specification and in the claims implies that the phrases before and after this term are to be considered either as alternatives or in combination.

The term **"new tree",** as used herein, refers to the new tree of type I and/or to the new tree of type II, i.e., mur fruitier type.

A **nursery:** is a place where plants are propagated and grown to usable size, e.g. up to the sale to private persons or commercial fruit orchards etc..

A **nursery tree:** is a young plant which has been propagated and raised in a nursery.

**Defoliation:** removal of leaves

**Proleptic shoots:** shoots that form out of buds that were formed the year before, i.e. after a dormant period.

**Sylleptic shoots:** schoots that are formed directly from axilliary buds without a period of dormancy.

**Knip tree or Knip boom:** internationally accepted term for a biannual tree obtained through grafting of a plant variety on a rootstock, growth of the plant in year one, and cutting back the stem at the end of the first year at about 50 to 80cm, followed by promotion of the top bud in the next year to create a central leader on which sylleptic shoots form side branches.

The main characteristics of the new tree of type I are as follows:
- crowns of productive branches at three levels, separated by windows sufficiently large to enable optimal light provision for production and ripening of the fruit,
- the main stem of the tree should not be cut (unless unavoidable due to adverse growing conditions), in order to avoid disturbance of the balance between fruit production and wood production at the start and in the later life of the tree: this has a further advantage of obtaining sylleptic shoots for the 1^{st} and the 3^{rd} level and proleptic shoots for the second level, and
- whereby the inclination of the branches versus the stem approaches 90°, ideal for optimal fruit producing capacity.

The new tree of type I preferably has a height between 1.8 and 2.7 m at the end of the nursery stage.

In an embodiment, the main characteristics of the new tree of type II are as follows:
- productive branches distributed evenly over the main stem of the tree,
- the main stem of the tree should not be cut (unless unavoidable due to adverse growing conditions), in order to avoid disturbance of the balance between fruit production and wood production at the start and in the later life of the tree: this has a further advantage of obtaining sylleptic and proleptic shoots spread over the main stem,
- whereby the inclination of the branches versus the stem approaches 90°, ideal for optimal fruit producing capacity.
- the side branches are typically short and, independent of their position on the main stem, of similar length. Such side branches advantageously are more generative in nature because their vegetative growth has been restricted.

The new tree of type II preferably has a height between 1.8 and 2.7 m at the end of the nursery stage.

The new tree of type II preferably has a distribution of the side branches wherein each side branch is located at a different position along the main stem of the tree.

In order to obtain a "knip" tree with comparable form, height and amount of fruit-producing branches as the tree according to the invention, a knip tree requires a number of measures that cause an imbalance between the fruit and wood producing capacity. This results in a loss of production in the first three to four years of the productive life of the traditional "knip" tree. This is due to the fact that the complete tree volume has to be established in a single year, after which a large part is cut away and hence lost.

Furthermore, the fruit-bearing branches of knip trees need to be much longer to reach the same amount of fruit-bearing wood as the new tree of the invention, for instance as the new tree of type II ('mur fruitier'). This is reflected in the way of planting knip trees, i.e. further away from each other. In addition, stronger wood is needed to carry the weight of the longer side branches, which further results in problems with regard to the provision of light onto the fruit. Alternatively, the side branches have to be cut, resulting in a further imbalance between the fruit and wood producing capacity of the tree and hence in a reduction of fruit production and fruit quality due to increased concentrations of sodium and potassium and reduced concentrations of magnesium en calcium. This can result in problems of e.g. occurrence of "bitter pit" or other physiological disorders, or an increased sensitivity for fungal growth during storage or other pre- and postharvest pests and diseases, etc. The same problems occur when knip trees are manipulated to produce the desired rectangular shape of the 'mur fruitier' hedge, requiring severe pruning of lower branches and stimulation of vegetative growth of higher branches.

Using the new tree of the invention such as the new tree of type II in orchards has the advantage that the grower or cultivator can direct the complete growing process of the trees towards fruit production, since the architecture of the new tree is already the architecture needed in the adult life of the tree. No focus on production of wood for additional branching etc, is needed, resulting in less loss of energy.

The ability of the grower to focus (irrigation, crop protection, fertilization, pruning, etc.) on the fruit production will both improve the quality of the fruit and will enhance the production level in the early production years. While with the knip tree, a lot of energy still has to be invested in the architecture (wood production) of the tree, the new tree of the invention can immediately start producing fruit after planting in the orchard.

The new tree, such as the new tree of the second type, can develop in all tranquility in the nursery in two years. All energy in these two years is sent to the correct places in order to obtain a tree architecture with an ideal production volume and an optimal balance between fruit and wood production.

In the orchard, the new tree according to the invention can immediately start producing fruit. The continuity of said production is also maintained, due to the generative properties of the new tree of the invention. The risk of alternate bearing is reduced by establishing an optimal number of fruits per tree, avoiding exhaustion of the tree. This, in combination with an improved light penetration onto the fruit due to the tree architecture, results in a continuous productivity.

Next to the advantages in fruit production and quality, the new tree will also reduce the labor normally needed to obtain a good fruit bearing tree from a knip tree. No time and energy is wasted on the establishment of the tree architecture, wood growth, cutting, etc..

Also, the new tree, such as the new tree of type II, will enhance the operational stability of fruit growing businesses. Not all growers have the skills to achieve optimal architecture, which may result in loss of productivity. The new tree type greatly reduces the involvement of the grower in establishing architecture in the orchard and as such reduces the risk of errors.

The new tree architecture is especially suitable for the "mur frutier" system, since the side branches can already be divided over the entire length of the tree stem.

As opposed to the new tree of type II, the knip tree displays a pyramidal form with side branches located primarily in the lower part. The knip tree needs, after planting in an orchard, pruning of the lower branches and at the same time stimulation of vegetative growth of the upper branches to fill the volume of the "mur fruitier" hedge which typically displays a rectangular cross section. The new tree of type II displays a cylindrical architecture which is a much better fit with the desired final architecture in the 'mur fruitier' and consequently requires minimal manipulation for the creation of it.

The new trees of the second type, when planted to create a 'mur fruitier' orchard, will, from the first year on, form a hedge-like row which is amenable to mechanical pruning, thus reducing pruning costs significantly. Also, the rapid creation of the required hedge-like row with the new trees of type II results in more efficient manual thinning and opens up the opportunity for mechanical thinning, which is preferable over chemical thinning. Furthermore, the cost of harvest is reduced as the fruits are easily accessible in the superficial fruiting zone that is present from the beginning when the new trees of type II are used to establish a 'mur fruitier' orchard.

The method for obtaining the new tree of type I, typically comprises the creation in the nursery of a ready-to-use tree type, characterized in that it is a tall tree (typically between 1.8 and 2.7 m depending on the variety), in pyramidal form, having three clearly distinguishable branching levels with a "window" in between the branching levels, using a unique combination and sequence of a number of known horticultural techniques such as grafting and occulation, pruning, defoliation, curving, bending, tearing, trimming, topping, girdling, ring barking, bark ringing, scoring, banding, regulating branching and growth using plant growth regulators, in a period of 1, 2 or more years, preferably 2 years.

The method for obtaining the new tree of type II, typically comprises the creation in the nursery of a ready-to-use tree type, characterized in that it is a tall tree (typically between 1.8 m and 2.7 m depending on the variety), in cylindrical form, having a diffuse branching pattern using a unique combination and sequence of a number of known horticultural techniques such as grafting and occulation, pruning, defoliation, curving, bending, tearing, trimming, topping, girdling, ring barking, bark ringing, scoring, banding, regulating branching and growth using plant growth regulators, in a period of 1, 2 or more years, preferably 2 years.

A new tree according to the invention, such as a new tree of type II, is created by joining a rootstock (or rootstock with interstock) with a scion of the desired fruit producing variety by means of commonly known horticultural techniques, e.g. whip and tongue grafting, splice grafting, T-grafting, V-grafting, side grafting, side-veneer grafting, cleft grafting, saddle grafting , bark grafting (veneer grafting), splice grafting, omega-grafting, chip-budding, occulation, stub grafting, shield budding, T-budding, inverted T-budding, patch budding, double shield budding, flute budding, etc...

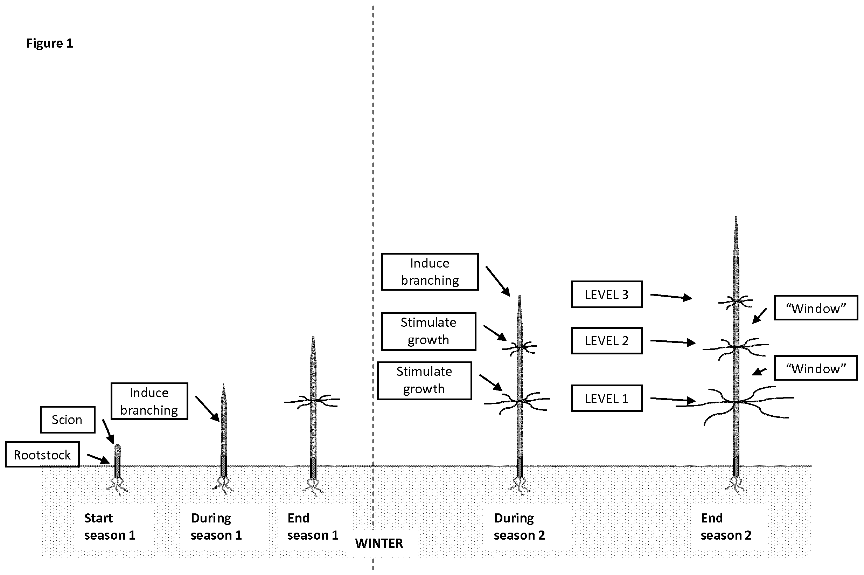

During the first season of growth of the united rootstock-scion or rootstock-interstock-scion of the new tree of type I, a number of horticultural techniques are performed to obtain an annual plant with a height of about 40 to 55 % of the final desired height, with sylleptic shoots at the level of the first branching level (Fig. 1).

At the start of the second growth season, the top of the tree is normally not pruned or cut. Under unforeseen circumstances, some pruning can be allowed (e.g. frozen buds, heterogeneous growth height due to adverse growing conditions).

If the formation of fruit bearing branches at the first branching level was not sufficient after the first growth season, it can be corrected through carving or other techniques for the induction of proleptic shoots.

All horticultural techniques used during the second growth season (Fig. 1) are next performed to obtain a pyramidal shape with three levels of branching with intersecting windows and desired tree height. The use of plant growth regulators or other techniques to induce branching and to control the spacing or distance between the branched levels is crucial.

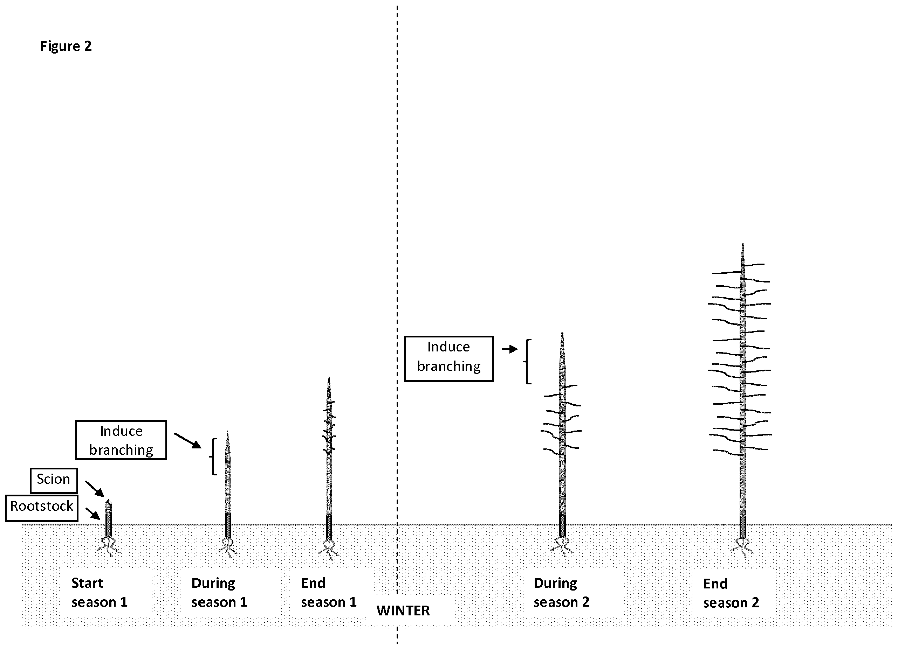

During the first season of growth of the united rootstock-scion or rootstock-interstock-scion of the new tree of type II, a number of horticultural techniques are performed to obtain an annual plant with a height of about 40 to 55 % of the final desired height, with sylleptic shoots starting at a level of 20-35 % of the final height and continuing to the top (Fig.2).

At the start of the second growth season, the top of the tree is normally not pruned or cut. Under unforeseen circumstances, some pruning can be allowed (e.g. frozen buds, heterogeneous growth height due to adverse growing conditions).

If the formation of fruit bearing branches was not sufficient after the first growth season, it can be corrected through carving or other techniques for the induction of proleptic shoots.

All horticultural techniques used during the second growth season (Fig. 2) are next performed to obtain a cylindrical shape with branches evenly covering the entire main stem. The use of plant growth regulators or other techniques to induce diffuse branching is crucial.

The invention is illustrated by the following non-limiting examples

### EXAMPLES

### Method for producing the New Tree of Type I:

An exemplary method for obtaining a new tree of type I comprises the steps of:
1) planting a scion of the desired fruit producing variety that has been united with a suitable rootstock or rootstock with interstock,
2) during the first growth season:
   - harmonising the length of the growing trees and inducing at the same time branching when the trees reach a height of approx. 20-35 % of the desired final tree height, by adding growth regulators to the top such as BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), PP528 (ethyl-5-(4-chlorophenyl)-2H-tetrazol-2-yl-acetate), or PP938 (dyallyl-succinate), such substances applied alone or in combinations
   - growth inhibition of main stem when the tree has reached a height of approx. 40 to 55 % of the desired final tree height by applying a growth inhibitor to the top such prohexadione-Ca (cyclohexanecarboxylic acid, 3,5-dioxo-4-(1- oxopropyl)-ion(1-) calcium), ethrel (2-chloroethylphosphonic acid), NAA (naphthaleneacetic acid), butraline (N-sec-butyl-4-tert-butyl-2,6-dinitro-aniline), chlormequat (2-chloroethyltrimethyl-ammonium chloride), daminozide (succinic acid, mono(2,2-dimethylhydrazide)), or paclobutrazol (1-(4-chlorophenyl)-4,4-dimethyl-2-(1H-1,2,4-triazol-1-yl)-3-pentanol), such substances applied alone or in combinations
   - selective inhibition of side branching on the first branching level to a branch length that is less than the final desired length, typically less than 5 % of the desired final tree height, by applying prohexadione-Ca (cyclohexanecarboxylic acid, 3,5-dioxo-4-(1- oxopropyl)-ion(1-) calcium), ethrel (2-chloroethylphosphonic acid), NAA (naphthaleneacetic acid), butraline (N-sec-butyl-4-tert-butyl-2,6-dinitro-aniline), chlormequat (2-chloroethyltrimethyl-ammonium chloride), daminozide (succinic acid, mono(2,2-dimethylhydrazide)), or paclobutrazol (1-(4-chlorophenyl)-4,4-dimethyl-2-(1H-1,2,4-triazol-1-yl)-3-pentanol), such substances applied alone or in combinations.
3) during the second growth season:
   - cutting away the branches competing with the top of the tree above the second branching level,
   - if required, stimulating the production and/or elongation of proleptic side branches at the second branching level and/or first branching level by applying growth inducers and/or branching agents, such as gibberellic acid (e.g. GA₄, GA₇), BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), PP528 (ethyl-5-(4-chlorophenyl)-2H-tetrazol-2-yl-acetate), or PP938 (dyallyl-succinate), such substances applied alone or in combinations,
   - inducing the 3^{rd} branching level when the tree reaches a height of approx. 55 to 70 % of the desired final height by applying to the top growth regulators such as BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), PP528 (ethyl-5-(4-chlorophenyl)-2H-tetrazol-2-yl-acetate), or PP938 (dyallyl-succinate), such substances applied alone or in combinations,
   - inhibiting growth of side branches at 1^{st}, 2^{nd} and 3^{rd} level by applying growth inhibitors such as prohexadione-Ca (cyclohexanecarboxylic acid, 3,5-dioxo-4-(1-oxopropyl)-ion(1-) calcium), ethrel (2-chloroethylphosphonic acid), NAA (naphthaleneacetic acid), butraline (N-sec-butyl-4-tert-butyl-2,6-dinitro-aniline), chlormequat (2-chloroethyltrimethyl-ammonium chloride), daminozide (succinic acid, mono(2,2-dimethylhydrazide)), or paclobutrazol (1-(4-chlorophenyl)-4,4-dimethyl-2-(1H-1,2,4-triazol-1-yl)-3-pentanol), such substances applied alone or in combinations.

The method results in a ready-to-use tree type, characterized in that it has a tree height typically between 1.8 and 2.7 m, in pyramidal form, having three clearly distinguishable branching levels, each with a "window" in between, the lowest level typically having a width between 15 and 30 % of the desired tree height, as depicted in Figure 1.

### Method for producing the New Tree of Type II:

An exemplary method for obtaining the new tree according to the present invention comprises the steps of:
1) planting a scion of the desired fruit producing variety that has been united with a suitable rootstock or rootstock with interstock,
2) during the first growth season:
   - harmonising the length of the growing trees and inducing during the growing season, starting when the trees reach a height of about 20-35 % of the desired final tree height, the formation of branches with vegetative and generative structures, by several applications to the top portion of the tree of growth regulators such as BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), PP528 (ethyl-5-(4-chlorophenyl)-2H-tetrazol-2-yl-acetate), PP938 (dyallyl-succinate), ethrel (2-chloroethylphosphonic acid), cyclanilide (1-[[(2,4-Dichlorophenyl)amino]carbonyl]cyclopropanecarboxylic acid), such substances applied alone or in combinations,
   - growth inhibition of main stem when the tree has reached a height of approx. 40 to 55 % of the desired final tree height by applying a growth inhibitor to the top such as prohexadione-Ca (cyclohexanecarboxylic acid, 3,5-dioxo-4-(1- oxopropyl)-ion(1) calcium), ethrel (2-chloroethylphosphonic acid), NAA (naphthaleneacetic acid), butraline (N-sec-butyl-4-tert-butyl-2,6-dinitro-aniline), chlormequat (2-chloroethyltrimethyl-ammonium chloride), daminozide (succinic acid, mono(2,2-dimethylhydrazide)), paclobutrazol (1-(4-chlorophenyl)-4,4-dimethyl-2-(1H-1,2,4-triazol-1-yl)-3-pentanol), such substances applied alone or in combinations,
   - selective inhibition of side branching to a branch length that is less than the final desired length, typically less than 1 % of the desired final tree height, i.e. 1% of 1.8 m to 2.7 m, by applying prohexadione-Ca (cyclohexanecarboxylic acid, 3,5-dioxo-4-(1- oxopropyl)-ion(1-) calcium), ethrel (2-chloroethylphosphonic acid), NAA (naphthaleneacetic acid), butraline (N-sec-butyl-4-tert-butyl-2,6-dinitro-aniline), chlormequat (2-chloroethyltrimethyl-ammonium chloride), daminozide (succinic acid, mono(2,2-dimethylhydrazide)), paclobutrazol (1-(4-chlorophenyl)-4,4-dimethyl-2-(1H-1,2,4-triazol-1-yl)-3-pentanol), such substances applied alone or in combinations.
3) during the second growth season:
   - cutting away the branches competing with the top of the tree
   - if required, stimulating the production and/or elongation of proleptic side branches spread over the main stem by applying growth inducers and/or branching agents, such as gibberellic acid (e.g. GA₄, GA₇), BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), PP528 (ethyl-5-(4-chlorophenyl)-2H-tetrazol-2-yl-acetate), PP938 (dyallyl-succinate), such substances applied alone or in combinations,
   - inducing further sylleptic branching spread over the growing main stem during the second year of growth of the tree by applying growth regulators such as BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), PP528 (ethyl-5-(4-chlorophenyl)-2H-tetrazol-2-yl-acetate), PP938 (dyallyl-succinate), cyclanilide (1-[[(2,4-Dichlorophenyl)amino]carbonyl]cyclopropanecarboxylic acid), such substances applied alone or in combinations,
   - inhibiting growth of side branches to a branch length that is typically less than 10 % of the desired final tree height, i.e. 10% of 1.8 m to 2.7 m, by applying growth inhibitors such as prohexadione-Ca (cyclohexanecarboxylic acid, 3,5-dioxo-4-(1-oxopropyl)-ion(1-) calcium), ethrel (2-chloroethylphosphonic acid), NAA (naphthaleneacetic acid), butraline (N-sec-butyl-4-tert-butyl-2,6-dinitro-aniline), chlormequat (2-chloroethyltrimethyl-ammonium chloride), daminozide (succinic acid, mono(2,2-dimethylhydrazide)), paclobutrazol (1-(4-chlorophenyl)-4,4-dimethyl-2-(1H-1,2,4-triazol-1-yl)-3-pentanol), such substances applied alone or in combinations.

The method results in a ready-to-use tree type, characterized in that it has a tree height typically between 1.8 and 2.7 m, in cylindrical form, showing a diffuse pattern of branching spread out over the length of the main stem, with branches typically having a width of 10 % or less of the desired tree height, i.e. typically a width of 18 cm to 27 cm, as depicted in Figure 2.

## Claims

1. A nursery fruit tree having the following characteristics:
- productive branches distributed evenly over the main stem of the nursery fruit tree,
- a substantially uncut main stem, and
- inclination of the side branches versus the stem approaches 90°.

2. The nursery fruit tree according to claim 1, wherein the side branches are of similar length independent of their position on the main stem.

3. The nursery fruit tree according to claim 1 or 2, wherein the nursery fruit tree comprises sylleptic and proleptic shoots spread over the main stem.

4. The nursery fruit tree according to any one of claims 1 to 3, wherein the height of the nursery fruit tree is between 1.8 and 2.7 m.

5. The nursery fruit tree according to any one of claims 1 to 4, capable of forming a mur fruitier.

6. A fruit tree grown from the nursery fruit tree according to any one of claims 1 to 5.

7. A method for obtaining a nursery fruit tree comprising the steps of:
1) planting a scion of the desired fruit producing variety that has been united with a suitable rootstock or rootstock with interstock,
2) during the first growth year:
- harmonising the length of the growing nursery fruit trees and inducing the formation of branches by adding growth regulators to the top portion of the tree during the growing season, starting when the nursery fruit tree reaches about 20 to 35 % of the desired final tree height,
- growth inhibition of the main stem, by applying a growth inhibitor when the height of the tree reaches about 40 to 55 % of the desired final tree height, and
- selective inhibition of side branching,
3) during the second growth year:
- cutting away the branches competing with the top of the tree,
- stimulating the induction and/or elongation of proleptic side branches spread over the main stem,
- stimulating the induction and/or elongation of sylleptic side branches spread over the main stem, and
- inhibiting growth of side branches spread over the main stem.

8. The method according to claim 7, wherein a selective growth regulator for inducing branching selected from the group comprising: BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), PP528 (ethyl-5-(4-chlorophenyl)-2H-tetrazol-2-yl-acetate), PP938 (dyallyl-succinate), ethrel (2-chloroethylphosphonic acid), and cyclanilide (1-[[(2,4-Dichlorophenyl)amino]carbonyl]cyclopropanecarboxylic acid), is used.

9. The method according to claim 7 or 8, wherein, a selective inhibitor of the growth of the main stem and/or side branches selected from the group comprising: prohexadione-Ca (cyclohexanecarboxylic acid, 3,5-dioxo-4-(1- oxopropyl)-ion(1-) calcium), ethrel (2-chloroethylphosphonic acid), NAA (naphthaleneacetic acid), butraline (N-sec-butyl-4-tert-butyl-2,6-dinitro-aniline), chlormequat (2-chloroethyltrimethyl-ammonium chloride), daminozide (succinic acid, mono(2,2-dimethylhydrazide)), or paclobutrazol (1-(4-chlorophenyl)-4,4-dimethyl-2-(1H-1,2,4-triazol-1-yl)-3-pentanol), such substances applied alone or in combinations, is used to regulate the height of the tree.

10. The method according to any one of claims 7 to 9, wherein growth regulators selected from the group comprising: gibberellic acid (e.g. GA4, GA7), BA (6-benzylaminopurine), DPU (N,N'-diphenylurea), maleic hydrazide (1,2-dihydropyridazine-3,6-dione), M&B 25-105 (propyl [3-(1,1-dimethylethyl)phenoxy]acetate), NC9634 (((3-phenyl-1,2,4-thiadiazol-5-yl)thio)acetic acid), Off-Shoot-O (mixture of methyl esters of fatty acids), PP528 (ethyl-5-(4-chlorophenyl)-2H-tetrazol-2-yl-acetate), or PP938 (dyallyl-succinate), such substances applied alone or in combinations, are used to stimulate induction and/or elongation of proleptic side branches and/or of sylleptic side branches.

11. The nursery fruit tree according to any one of claims 1 to 5 obtained by the method according to any one of claims 7 to 10.

## Patentansprüche

1. Baumschulobstbaum mit den folgenden Eigenschaften:
- die tragenden Zweige sind gleichmäßig über den Hauptstamm des Baumschulobstbaums verteilt,
- ein im Wesentlichen ungeschnittener Hauptstamm, und
- die Neigung der Seitenzweige gegenüber dem Stamm beträgt ungefähr 90°.

2. Baumschulobstbaum nach Anspruch 1, wobei die Seitenzweige unabhängig von ihrer Position am Hauptstamm eine ähnliche Länge aufweisen.

3. Baumschulobstbaum nach Anspruch 1 oder 2, wobei der Baumschulobstbaum über dem Hauptstamm verteilte sylleptische und proleptische Sprosse aufweist.

4. Baumschulobstbaum nach einem der Ansprüche 1 bis 3, wobei die Höhe des Baumschulobstbaums zwischen 1,8 und 2,7 m beträgt.

5. Baumschulobstbaum nach einem der Ansprüche 1 bis 4, der zur Bildung einer Obstwand ("Mur Fruitier") fähig ist.

6. Obstbaum, der aus dem Baumschulobstbaum nach einem der Ansprüche 1 bis 5 herangezogen ist.

7. Verfahren zum Erhalten eines Baumschulobstbaums, umfassend die folgenden Schritte:
1) Pflanzen eines Edelreises der gewünschten obstproduzierenden Sorte, das mit einer geeigneten Unterlage oder Unterlage mit Zwischenunterlage vereinigt worden ist,
2) während des ersten Wachstumsjahrs:
- Harmonisieren der Länge der wachsenden Baumschulobstbäume und Induzieren der Zweigbildung durch Zugabe von Wachstumsregulatoren zu dem oberen Teil des Baums während der Wachstumssaison, wobei damit begonnen wird, wenn der Baumschulobstbaum ungefähr 20 bis 35% der gewünschten Baumendhöhe erreicht,
- Wachstumshemmung des Hauptstamms durch Ausbringen eines Wachstumshemmers, wenn die Höhe des Baums ungefähr 40 bis 55% der gewünschten Baumendhöhe erreicht, und
- selektive Hemmung der seitlichen Verzweigung,
3) während des zweiten Wachstumsjahrs:
- Wegschneiden der Zweige, die mit der Spitze des Baums konkurrieren,
- Stimulieren der Induktion und/oder Elongation der über dem Hauptstamm verteilten proleptischen Seitenzweige,
- Stimulieren der Induktion und/oder Elongation der über dem Hauptstamm verteilten sylleptischen Seitenzweige, und
- Hemmen des Wachstums der über dem Hauptstamm verteilten Seitenzweige.

8. Verfahren nach Anspruch 7, wobei ein selektiver Wachstumsregulator für das Induzieren von Verzweigung aus der Gruppe umfassend BA (6-Benzylaminopurin), DPU (N,N'-Diphenylharnstoff), Maleinsäurehydrazid (1,2-Dihydropyridazin-3,6-dion), M&B 25-105 (Propyl-[3-(1,1-dimethylethyl)phenoxy]acetat), NC9634 (((3-Phenyl-1,2,4-thiadiazol-5-yl)thio)essigsäure), Off-Shoot-O (Mischung aus Fettsäuremethylestern), PP528 (Ethyl-5-(4-Chlorphenyl)-2H-tetrazol-2-yl-acetat), PP938 (Diallylsuccinat), Ethrel (2-(Chlorethylphosphonsäure) und Cyclanilid (1-[[(2,4-Dichlorphenyl)amino]carbonyl]cyclopropancarbonsäure) eingesetzt wird.

9. Verfahren nach Anspruch 7 oder 8, wobei ein selektiver Hemmer des Wachstums des Hauptstamms und/oder der Seitenzweige ausgewählt aus der Gruppe umfassend Prohexadion-Ca (3,5-Dioxo-4-propionylcyclohexancarbonsäure-Calciumsalz), Ethrel (2-Chlorethylphosphonsäure), NAA (Naphthalinessigsäure), Butralin (N-sec.-Butyl-4-tert.-butyl-2,6-dinitroanilin), Chlormequat (2-Chlorethyltrimethylammoniumchlorid), Daminozid (Bernsteinsäuremono-(2,2-dimethylhydrazid)) oder Paclobutrazol (1-(4-Chlorphenyl)-4,4-dimethyl-2-(1H-1,2,4-triazol-1-yl)-3-pentanol), wobei diese Substanzen allein oder in Kombinationen ausgebracht werden, zum Regulieren der Baumhöhe eingesetzt wird.

10. Verfahren nach einem der Ansprüche 7 bis 9, wobei Wachstumsregulatoren, ausgewählt aus der Gruppe umfassend Gibberellinsäure (z.B. GA4, GA7), BA (6-Benzylaminopurin), DPU (N,N'-Diphenylharnstoff), Maleinsäurehydrazid (1,2-Dihydropyridazin-3,6-dion), M&B 25-105 (Propyl-[3-(1,1-dimethylethyl)phenoxy]acetat), NC9634 (((3-Phenyl-1,2,4-thiadiazol-5-yl)thio)essigsäure), Off-Shoot-O (Mischung aus Fettsäuremethylestern), PP528 (Ethyl-5-(4-chlorphenyl)-2H-tetrazol-2-ylacetat) oder PP938 (Diallylsuccinat), wobei diese Substanzen allein oder in Kombinationen ausgebracht werden, zum Stimulieren der Induktion und/oder Elongation der proleptischen Seitenzweige und/oder der sylleptischen Seitenzweige eingesetzt werden.

11. Baumschulobstbaum nach einem der Ansprüche 1 bis 5, erhalten nach dem Verfahren nach einem der Ansprüche 7 bis 10.

## Revendications

1. Arbre fruitier de pépinière, présentant les caractéristiques suivantes :
- des branches productrices distribuées de manière régulière sur l'ensemble de la tige principale de l'arbre fruitier de pépinière,
- une tige principale substantiellement non coupée, et
- l'inclinaison des branches latérales par rapport à la tige est proche de 90°.

2. Arbre fruitier de pépinière selon la revendication 1, où les branches latérales sont d'une longueur similaire indépendamment de leur position sur la tige principale.

3. Arbre fruitier de pépinière selon la revendication 1 ou 2, où l'arbre fruitier de pépinière comprend des pousses sylleptiques et proleptiques réparties sur l'ensemble de la tige principale.

4. Arbre fruitier de pépinière selon l'une quelconque des revendications 1 à 3, où la hauteur de l'arbre fruitier de pépinière est comprise entre 1,8 et 2,7 m.

5. Arbre fruitier de pépinière selon l'une quelconque des revendications 1 à 4, capable de former un mur fruitier.

6. Arbre fruitier cultivé à partir de l'arbre fruitier de pépinière selon l'une quelconque des revendications 1 à 5.

7. Méthode d'obtention d'un arbre fruitier de pépinière, comprenant les étampes :
1) de plantation d'un scion de la variété désirée productrice de fruits ayant été unie avec un porte-greffe ou porte-greffe avec intermédiaire, convenable,
2) pendant la première année de croissance :
- d'harmonisation de la longueur des arbres fruitiers de pépinière en croissance et d'induction de la formation de branches par l'addition de substances de croissance à la portion supérieure de l'arbre pendant la période de croissance, débutant lorsque l'arbre fruitier de pépinière atteint d'environ 20 à 35% de la hauteur d'arbre finale désirée,
- d'inhibition de la croissance de la tige principale, par l'application d'un inhibiteur de croissance lorsque la hauteur de l'arbre atteint d'environ 40 à 55% de la hauteur d'arbre finale désirée, et
- d'inhibition sélective de la ramification latérale,
3) pendant la deuxième année de croissance :
- d'élagage des branches en compétition avec la cime de l'arbre,
- de stimulation de l'induction et/ou de l'élongation de branches latérales proleptiques réparties sur l'ensemble de la tige principale,
- de stimulation de l'induction et/ou de l'élongation de branches latérales sylleptiques réparties sur l'ensemble de la tige principale, et
- d'inhibition de la croissance de branches latérales réparties sur l'ensemble de la tige principale.

8. Méthode selon la revendication 7, où on utilise une substance de croissance sélective pour l'induction de la ramification, choisie dans le groupe constitué par : la BA (6-benzylaminopurine), la DPU (N,N'-diphénylurée), l'hydrazide maléique (1,2-dihydropyridazine-3,6-dione), le M&B 25-105 ([3-(1,1-diméthyléthyl)phénoxy]acétate de propyle), le NC9634 (acide ((3-phényl-1,2,4-thiadiazol-5-yl)thio)acétique), l'Off-Shoot-O (mélange de méthylesters d'acides gras), le PP528 (5-(4-chlorophényl)-2H-tétrazol-2-yl-acétate d'éthyle), le PP938 (succinate de diallyle), l'Ethrel (acide 2-chloroéthylphosphonique), et le cyclanilide (acide 1-[[(2,4-dichlorophényl)amino]carbonyl]cyclopropane-carboxylique).

9. Méthode selon la revendication 7 ou 8, où on utilise un inhibiteur sélectif de la croissance de la tige principale et/ou des branches latérales, choisi dans le groupe constitué par : la prohexadione-Ca (acide cyclohexanecarboxylique, 3,5-dioxo-4-(1-oxopropyl)-ion(1-) calcium), l'Ethrel (acide 2-chloroéthylphosphonique), le NAA (acide naphtalèneacétique), la butraline (N-sec-butyl-4-tertio-butyl-2,6-dinitro-aniline), le chlorméquat (chlorure de 2-chloroéthyltriméthylammonium), le daminozide (acide succinique, mono(2,2-diméthylhydrazide)), ou le paclobutrazol (1-(4-chlorophényl)-4,4-diméthyl-2-(1H-1,2,4-triazol-1-yl)-3-pentanol), de telles substances étant appliquées seules ou en combinaisons, afin de réguler la hauteur de l'arbre.

10. Méthode selon l'une quelconque des revendications 7 à 9, où on utilise des substances de croissance choisies dans le groupe constitué par : l'acide gibbérellique (par exemple, GA4, GA7), la BA (6-benzylaminopurine), la DPU (N,N'-diphénylurée), l'hydrazide maléique (1,2-dihydropyridazine-3,6-dione), le M&B 25-105 ([3-(1,1-diméthyléthyl)phénoxy]acétate de propyle), le NC9634 (acide ((3-phényl-1,2,4-thiadiazol-5-yl)thio)acétique), l'Off-Shoot-O (mélange de méthylesters d'acides gras), le PP528 (5-(4-chlorophényl)-2H-tétrazol-2-yl-acétate d'éthyle), ou le PP938 (succinate de diallyle), de telles substances étant appliquées seules ou en combinaisons, afin de stimuler l'induction et/l'élongation de branches latérales proleptiques et/ou de branches latérales sylleptiques.

11. Arbre fruitier de pépinière selon l'une quelconque des revendications 1 à 5, obtenu par la méthode selon l'une quelconque des revendications 7 à 10.
